# EUROPÄISCHE PATENTSCHRIFT

(11) **EP 0 772 715 B1**
(45) Veröffentlichungstag und Bekanntmachung des Hinweises auf die Patenterteilung: **02.09.1998**
(21) Anmeldenummer: 95925704.9
(22) Anmeldetag: 19.07.1995
(51) Int. Cl.: D21G 1/02, F16C 13/00

(54) **VERWENDUNG EINER WALZE**
USE OF A ROLL
UTILISATION D'UN ROULEAU

(30) Priorität: 22.07.1994 DE 4426007; 11.11.1994 DE 4440267
(43) Veröffentlichungstag der Anmeldung: 14.05.1997
(73) Patentinhaber: Eduard Küsters Maschinenfabrik GmbH & Co. KG, 47805 Krefeld (DE)
(72) Erfinder: BRENDEL, Bernhard, D-47929 Grefrath (DE)
(74) Vertreter: Palgen, Peter, Dr. Dipl.-Phys.
(86) Internationale Anmeldenummer: DE9500948
(87) Internationale Veröffentlichungsnummer: WO9603545

(56) Entgegenhaltungen:
- EP-A- 0 201 783
- EP-A- 0 315 567
- DE-A- 4 202 373
- DE-A- 4 203 497

## Beschreibung

Die Erfindung bezieht sich auf die Verwendung einer Walze, wie aus der EP-A-210 388 oder der EP-A-201 783 bekannt, zur Erzeugung besonders niedriger Linienkräfte.

Bei der Walze ist der EP 210 388 wirken die Reihen der Stützelemente in der Wirkungsebene der Walze, d.h. im allgemeinen in der Verbindungsebene der Walze, d.h. im allgemeinen in der Verbindungsebene der Achse der Walze mit der Achse einer Gegenwalze, nach verschiedenen Seiten auf die Hohlwalze, so daß auf diese über die Länge variable Kraftprofile ausübbar sind, sich im Walzspalt ein gewünschtes meist nicht gleichmäßiges Linienkraftprofil einstellt. Dieses Linienkraftprofil hängt von den von den einzelnen Stützelementen ausgeübten Kräften und von den Verformungseigenschaften der Hohlwalze und des Produkts ab. Die für die Erzielung eines bestimmten Linienkraftprofils im Einzelfall von den Stützelementen aufzubringenden Kräfte können z.B. unter Zuhilfenahme der Finite-Elemente-Methode errechnet werden.

Die Stützelemente bei der bekannten Walze wirken nach Art von Kolben und Zylinder mit dem Querhaupt zusammen. Jedes Stützelement hat eine eigene Zuleitung und kann dadurch unabhängig von den anderen Stützelementen mit Druckflüssigkeit beaufschlagt werden. Die Zuleitungen im Querhaupt münden bei jedem Stützelement in eine diesem zugeordnete Druckkammer, und die zugeführte Druckflüssigkeit drückt das Stützelement radial nach außen, so daß dieses mit einer der Wölbung des Innenumfangs der Hohlwalze angepaßten Anlagefläche gegen diesen Innenumfang anliegt. In der Anlagefläche sind flache Lagertaschen ausgebildet, die über Drosselbohrungen mit der Druckkammer in Verbindung stehen. Die der Druckkammer zugeführte Druckflüssigkeit tritt über die Drosselbohrungen in die Lagertaschen aus und bildet dort ein hydrostatisches Druckpolster, über die das die Stützelemente ihre Kraft gegen den Innenumfang der Hohlwalze ausüben. Die Druckflüssigkeit strömt außerdem ständig über den Rand der Lagertaschen nach außen ab und bildet in den Randbereichen der Lagertaschen einen Flüssigkeitsfilm, der eine metallische Berührung zwischen den Stützelementen und den Innenumfang der Hohlwalze verhindert und durch den zusätzlich Kraft auf die Hohlwalze übertragen wird.

Bei der vorgenannten bekannten Walze werden die Kräfte durch die in dem Stützelement wirkende Druckflüssigkeit übertragen und ist der Zwischenraum zwischen Querhaupt und Innenumfang der Hohlwalze an der Ausbildung der Linienkraft nicht beteiligt, d.h. es spielt keine Rolle, ob er mit Druckflüssigkeit gefüllt ist oder nicht.

Die Erfindung hat aber auch Bedeutung für Walzen nach der DE 38 20 974 C2. Bei derartigen Walzen ist der Zwischenraum zwischen Querhaupt und Innenumfang der Hohlwalze in Umfangsrichtung nicht durch Längsdichtungen oder dergleichen unterbrochen, sondern ganz mit Druckflüssigkeit eines steuerbaren Drucks gefüllt. Die einzelnen Stützelemente erhalten ebenfalls Druckflüssigkeit eines steuerbaren Drucks, der wahlweise über oder unter dem Druck in dem umgebenden Zwischenraum liegen kann. Liegt der Druck über dem Druck in dem umgebenden Zwischenraum, so üben diese Stützelemente eine entsprechende positive Kraft gegen den Innenumfang der Hohlwalze aus. Liegt der Druck in den Stützelementen jedoch unterhalb des Drucks in dem Zwischenraum, so bildet das betreffende Stützelement eine Zone, die aus dem ansonsten gleichmäßigen Druck in dem Zwischenraum ausgespart ist. Hier wirkt also eine geringere Kraft pro Querschnittseinheit als in dem umgebenden Zwischenraum. Ein solches Stützelement begrenzt also ein "Loch" in der gleichmäßigen Druckausübung der Druckflüssigkeit in dem Zwischenraum und hat etwa die gleiche Wirkung wie ein mit der Druckdifferenz positiv wirkendes Stützelement, welches auf der diametral gegenüberliegenden Seite des Querhaupts angebracht wäre.

Auch für Walzen dieser Art ist die Erfindung geeignet.

Aus der EP 201 783 A2 schließlich ist bekannt, eine Walze
mit einer umlaufenden, den arbeitenden Walzenumfang bildenden Hohlwalze,
mit einem undrehbaren, die Hohlwalze der Länge nach durchgreifenden, ringsum radialen Abstand vom Innenumfang der Hohlwalze belassenden Querhaupt, auf welches an den Enden äußere Kräfte übertragbar sind,
mit einer ersten Reihe mehrerer an dem Querhaupt angeordneter und sich an diesem abstützender, in dessen Längsrichtung dicht aufeinanderfolgender, einzeln oder höchstens in kleinen Gruppen von bis etwa drei Stützelementen separat ansteuerbarer hydrostatischer Stützelemente, mittels deren voneinander unabhängige, gegen den Walzspalt gerichtete Kräfte gegen den Innenumfang der Hohlwalze ausübbar sind,
und mit mindestens einer zweiten Reihe mehrerer an dem Querhaupt angeordneter und sich an diesem abstützender, in dessen Längsrichtung aufeinanderfolgender, hydrostatischer Stützelemente, mittels deren vom Walzspalt hinweggerichtete Kräfte gegen den Innenumfang der Hohlwalze ausübbar sind,
mit in oder an dem Querhaupt vorgesehener Zuleitungen für hydraulische Druckflüssigkeit zu jedem einzelnen Stützelement
und mit einer Steuereinrichtung, mittels derer die Drücke in den einzelnen Zuleitungen unabhängig voneinander wählbar sind,
wobei mindestens eine Gruppe von mehreren aufeinanderfolgenden Stützelementen der zweiten Reihe so angesteuert wird, daß sie eine über die Erstreckung der Gruppe in Längsrichtung der Walze gleichmäßige Gegen-Linienkraft erzeugen.

Hierbei sind die beiden Reihen von Stützelementen als primäre, gegen den Walzspalt arbeitende und als sekundäre Stützelemente bezeichnet. Die Walze ist beheizt, und die Wärme wird durch die Druckflüssigkeit der primären Stützelemente auf die Hohlwalze übertragen. Für mehr Wärme wird mehr Druckflüssigkeit gleichbleibender Temperatur durchgesetzt. Dadurch ändert sich die von dem betreffenden primären Stützelement ausgeübte Kraft. Diese Kraftänderung wird durch eine entsprechende Kraftänderung an dem gegenüberliegenden sekundären Stützelemente kompensiert. Zweck der bekannten Walze ist also die Aufrechterhaltung des Linienkraftprofils bei Temperaturänderungen.

Bei manchen Bekandlungen des Papiers, besonders im letzten Stadium der Veredlung, sind nur sehr geringe Linienkräfte im Bereich von einigen wenigen 10 N/cm Walzenlänge erwünscht. Derartige Linienkraftverläufe zustandezubringen, stößt in der Praxis häufig auf Schwierigkeiten, weil dabei einzelne Stützelemente nur ganz geringe Drücke erfahren dürfen, wenn sich nicht sogar die theoretische Notwendigkeit "negativer" hydraulischer Drücke in bestimmten Stützelementen ergibt. Die Erfahrung zeigt aber, daß ein zufriedenstellendes Arbeiten mit hydrostatisch gestützten Walzen der in Rede stehenden Art erst bei Betriebsdrücken der hydraulischen Flüssigkeit oberhalb etwa 3 bar möglich ist.

Der Erfindung liegt die Aufgabe zugrunde, bei einer Walze der beschriebenen Art die Ausübung besonders niedriger Linienkräfte zu ermöglichen.

Diese Aufgabe wird durch die in Anspruch 1 wiedergegebene Erfindung gelöst.

Die Wirkung der erfindungsgemäßen Maßnahme beruht darauf, daß die nach außen hin von der Walze ausgeübte Linienkraft sich aus der Differenz der von den beiden Reihen der Stützelemente ausgeübten Kräfte ergibt. Die Hohlwalze wird mit einer gleichmäßigen Linienkraft von den Stützelementen der zweiten Reihe von dem Walzspalt "weggezogen". Damit die gegen den Walzspalt gerichteten Stützelemente in dem Walzspalt die gewünschte positive, wenn auch geringe, Linienkraft erzeugen können, müssen sie mit einem entsprechend erhöhten Druck beaufschlagt werden. Ein Teil dieses Druckes wird dafür verbraucht, die von dem Walzspalt hinweggerichteten Kräfte der Stützelemente der zweiten Reihe wettzumachen. Die im Walzspalt in Erscheinung tretende Linienkraft ergibt sich aus den Anteilen der Stützelemente der ersten Reihe, die über den vom Walzspalt hinweggerichteten gleichmäßigen Linienkräfte liegen. Durch die Vorgabe einer gleichmäßigen von dem Walzspalt hinweggerichteten Linienkraft wird der Betriebsdruck der gegen den Walzspalt gerichteten Stützelemente künstlich erhöht, und zwar in einem Bereich hinein, der ein einwandfreies Arbeiten der Stützelemente ermöglicht.

Die Stützelemente der zweiten Reihe können in gleicher Ausbildung und Anzahl den Stützelementen der ersten Reihe diametral gegenüberliegend vorgesehen sein. Dies ist jedoch nicht zwingend. Notwendig ist nur, daß die Stützelemente der zweiten Reihe eine gleichmäßige vom Walzspalt hinweggerichtete Kraftverteilung erzeugen. Es können also auch weniger Stützelemente in einer anderen Anordnung als in der ersten Reihe vorhanden sein, sofern sie nur Gleichmäßigkeit der Kraft in der Gegenrichtung erbringen.

Die erfindungsgemäße Maßnahme ist in erster Linie in dem Fall sinnvoll, daß es um niedrige Linienkräfte im Walzspalt geht. Wenn das geforderte Liniendruckprofil im Walzspalt so hoch gelegen ist, daß die von den einzelnen gegen den Walzspalt gerichteten Stützelemente auszuübenden Kräfte hinreichend hohe hydraulische Drücke in den Stützelementen verlangen, so daß die Stützelemente einwandfrei arbeiten, bedarf es der künstlichen Erhöhungen nicht mehr und würde diese nur einen unnötigen zusätzlichen Energieverbrauch darstellen.

Das grundsätzliche Bestreben bei der Erfindung geht dahin, die Feineinstellung der Linienkraftverteilung über die Breite der Bahn ohne die Zuhilfenahme externer Hilfsmittel zustande zu bringen, wie sie bisher in Gestalt von Warmluftdüsen oder induktiven Heizvorrichtungen üblich waren. Die dichte Staffelung der Stützelemente im Verein mit einer ausreichend anpassungsfähigen Hohlwalze und der erfindungsgemäßen Ausgestaltung ergibt eine feinfühlige Justierung der Linienkraftverteilung bis hin zu ganz geringen Linienkraftwerten.

Die Erfindung ist bereits verwirklicht, wenn die gleichmäßige Linienkraft in der zweiten Reihe nur auf einem Längenabschnitt der Walze vorliegt.

In vielen Fällen wird es aber in Betracht kommen, sämtliche Stützelemente der zweiten Reihe mit der gleichen Linienkraft zu betreiben, so daß also auf der ganzen Länge der Walze eine konstante Gegen-Linienkraft pro Längeneinheit vorliegt.

Im Bereich niedriger Liniendrücke ist die Einhaltung eines bestimmten vorgegebenen Linienkraftverlaufs längs des Walzspalts einerseits besonders wichtig, andererseits besonders schwierig.

In diesem Bereich bedeuten schon Abweichungen um relativ geringe absolute Kraftbeträge von dem vorgegebenen Linienkraftverlauf erhebliche relative Abweichungen und entsprechend hohe Schwankungen längs des Walzspalts in dem beabsichtigten Behandlungseffekt. Wenn also die Behandlung z.B. einer Papierbahn mit niedrigen Liniendrücken richtig zur Wirkung kommen soll, muß auf eine besonders getreue Einhaltung eines vorgegebenen Linienkraftverlaufs geachtet werden.

Die Einhaltung eines vorgegebenen Linienkraftverlaufs ist erschwert, weil die Verformungseigenschaften der Hohlwalze und insbesondere der Endeneinfluß als Störfaktoren zu berücksichtigen sind. Die Hohlwalze ist ja ein endlicher Rohrabschnitt, der im Innern eine Streckenlast erfährt, die mit Abstand von den Enden aufhört.

Im Innern der Längserstreckung der Hohlwalze erfährt diese durch die in einander entgegengesetzten Richtungen wirkenden Stützelemente der beiden Reihen eine ovale Querschnittsverformung, die im Innern zu einer bestimmten Linienkraftverteilung führt. Gegen die Enden hin jedoch nimmt mangels dort in gleicher Weise wie im Innern wirkender Stützelemente die Ovalität wieder ab, was sich naturgemäß auch im Linienkraftverlauf an den Enden auswirkt. Bei Walzen der in Rede stehenden Art ist es ein Charakteristikum, daß schon zur Erzielung eines konstanten Linienkraftverlaufs bei einer über die Breite vollkommen gleichmäßigen Bahn eine starke ungleichmäßige Druckverteilung in den gegen die Walzenenden gelegenen Stützelementen erforderlich ist. Die Drücke in den endständigen Stützelementen müssen deutlich über einen im Mittelbereich der Walze vorliegenden Mittelwert erhöht werden, die Drücke in den innen benachbarten Stützelementen ebenso deutlich darunter erniedrigt werden, um zu einer gleichmnäßigen Linienkraftverteilung zu kommen. Schon die Eigenschaften der Walze selbst stellen also erhebliche Anforderungen an die Korrekturmöglichkeit im Randbereich.

Neben den internen, d.h. durch die Walze selbst bzw. ihre Begrenzung in Längsrichtung bedingten Einflüssen können aber auch im Randbereich noch externe Einflüsse vorliegen, denen es zusätzlich zu begegnen gilt und die damit zusammenhängen, daß meist eben nicht eine über die Breite gleichmäßige Bahn zu bearbeiten ist.

Einer dieser Einflüsse ist das Temperaturprofil der Gegenwalze, die meist am Rand, wo die Papierbahn keine Wärme abführt, wärmer ist als in den inneren Bereichen.

Außerdem ist die Papierbahn am Rand meist trockener, was zur Erzielung eines gleichmäßigen Behandlungseffekts eine Anpassung des Behandlungsdrucks erfordert.

Die Papierbahn könnte in der Trockenpartie der Papiermaschine in Querrichtung geschrumpft sein, was ebenso wie das ungleichmäßige Temperaturprofil eine Anpassung der Druckausübung notwendig macht.

Schließlich können Profilprobleme des Stoffauflaufs und der Filze einem Korrekturbedarf am Rand verursachen.

Alle diese Einflüsse müssen durch Korrekturen am Rand der Walze ausgeglichen werden, wo also auch von der Walze selbst her schon Korrekturen notwendig sind, die die verbleibende Korrekturkapazität beschränken, so daß für die Berücksichtigung externer Effekte nicht mehr viel Korrekturpotential vorhanden ist. Es kann hierbei Fälle geben, in denen die Walze aus sich heraus mit ihren beiden Reihen von Stützelementen den Korrekturbedarf nicht mehr bewältigen kann.

Der Erfindung liegt daher auch noch die weitere Aufgabe zugrunde, bei einer Walze der in Rede stehenden Art die Korrekturmöglichkeiten am Rande zu verbessern.

Diese Aufgabe wird gemäß Anspruch 2 dadurch gelöst, daß die Linienkraftverteilung im Walzspalt an mindestens einem Ende der Walze zusätzlich, d.h. über das der Walze mit ihren Reihen von Stützelementen innewohnende Korrekturpotential hinaus korrigiert wird.

Dieser Gedanke kann nicht nur unter dem Aspekt gesehen werden, der Walze gewissermaßen zu Hilfe zu kommen, wenn die Randungleichmäßigkeiten der Bahn das eigene Korrekturpotential der Walze auszuschöpfen drohen. Eine wichtige Einsatzweise der zusätzlichen Einrichtungen besteht vielmehr darin, die walzenimmanenten Ungleichmäßigkeiten unter der Annahme einer gleichmäßigen Belastung durch die Bahn von vornherein anzugleichen. Die Stützelemente sollen am Rand nicht mehr, nur um die gestaltbedingten Verformungscharakteristiken der Hohlwalze auszugleichen, stark unterschiedliche Kräfte ausüben müssen, sondern davon entbunden sein und über die Breite der Bahn im wesentlichen gleiche Kräfte ausüben können. Wenn dann im Betrieb durch die Bahn Unregelmäßigkeiten am Rand und ein entsprechender Korrekturbedarf auftreten, kann dieser auf rein hydraulischem Wege durch geeignete Steuerung der Stützelemente befriedigt werden, die dann ja nicht mehr durch die Endenkorrektur der Hohlwalze beansprucht sind. Die hydraulische Korrektur durch die Stützelemente selbst kann relativ einfach und vor allem verzögerungsfrei vor sich gehen.

Die zusätzlichen Einrichtungen können auf mindestens drei Weisen konkret ausgeführt werden, wobei die verschiedenen Merkmale durchaus auch gleichzeitig an einer Walze vorhanden sein können.

Bei einer ersten Ausführungsform einer entsprechend ausgestalteten Walze ist die gleichmäßige Gegenlinienkraft nur im Innern der Längserstreckung der Walze vorgesehen und werden an den Enden in der zweiten Reihe davon unabhängige "rückwärts gerichtete" Kräfte angebracht, um eine gewünschte Endenkorrektur herbeizuführen, wie es für sich genommen aus der DE-PS 23 25 721 bekannt ist.

Auch bei einer zweiten Ausführungsform dieser Art sind zusätzliche gegen den Innenumfang der Hohlwalze wirkende Elemente vorgesehen, nämlich zu beiden Seiten der Wirkebene wirkende Spreizelemente, die auf den Innenumfang des Endes der Hohlwalze quer zu der Wirkebene wirkende Kräfte ausüben und das Ende der Hohlwalze gewissermaßen zur Wirkebene auseinanderziehen, wodurch die Hohlwalze im Walzspalt am Ende von dem Walzspalt fortgezogen wird.

Auch diese Maßnahme ist für sich genommen bekannt, nämlich aus der Firmenschrift der Firma Kleinewefers GmbH "Das Hydrein-Walzsystem" und der entsprechenden DE 33 25 385 C2.

Ein dritter Gedanke zu Endenbeeinflussung bei einer erfindungsgemäßen Walze sieht zusätzliche Mittel zur thermischen Profilierung des Endes der Hohlwalze vor, beispielsweise zur Erwärmung, um eine Durchmesservergrößerunq und eine Linienkrafterhöhung im Walzspalt zustandezubringen, oder eine Kühlung für das Gegenteil.

Bevorzugt können die Mittel eine Einrichtung zur Beaufschlagung nur des Endbereichs des Innenumfangs der Hohlwalze mit einem fluiden Wärmeträgermedium umfassen.

Auch dieser Gedanke ist für sich genommen durch die EP 328 503 bekannt.

In der Zeichnung sind schematisch Ausführungsbeispiele der Erfindung dargestellt.
Fig. 1 zeigt das Prinzip der Erfindung an einer geeigneten Walze, teilweise im Längsschnitt;
Fig. 2 zeigt ein Beispiel eines gewünschten Linienkraftverlaufs;
Fig. 3 und 4 zeigen Diagramme der für die Erzielung des Linienkraftverlaufs nach Fig. 2 an den einzelnen Stützelementen notwendigen Kräfte;
Fig. 5 und 6 zeigen Ausführungsbeispiele;
Fig. 7 zeigt einen Querschnitt durch eine Walze mit zwei "zweiten" Reihen von Stützelementen;
Fig. 8 zeigt einen Querschnitt durch eine Walze mit in Querrichtung wirkenden Spreizelementen;
Fig. 9 zeigt zwei zusammengehörige Diagramme, die die zur Erzielung eines gleichmäßigen Linienkraftverlaufs notwendige Druckverteilung in der erstens Reihe von Stützelementen veranschaulichen.

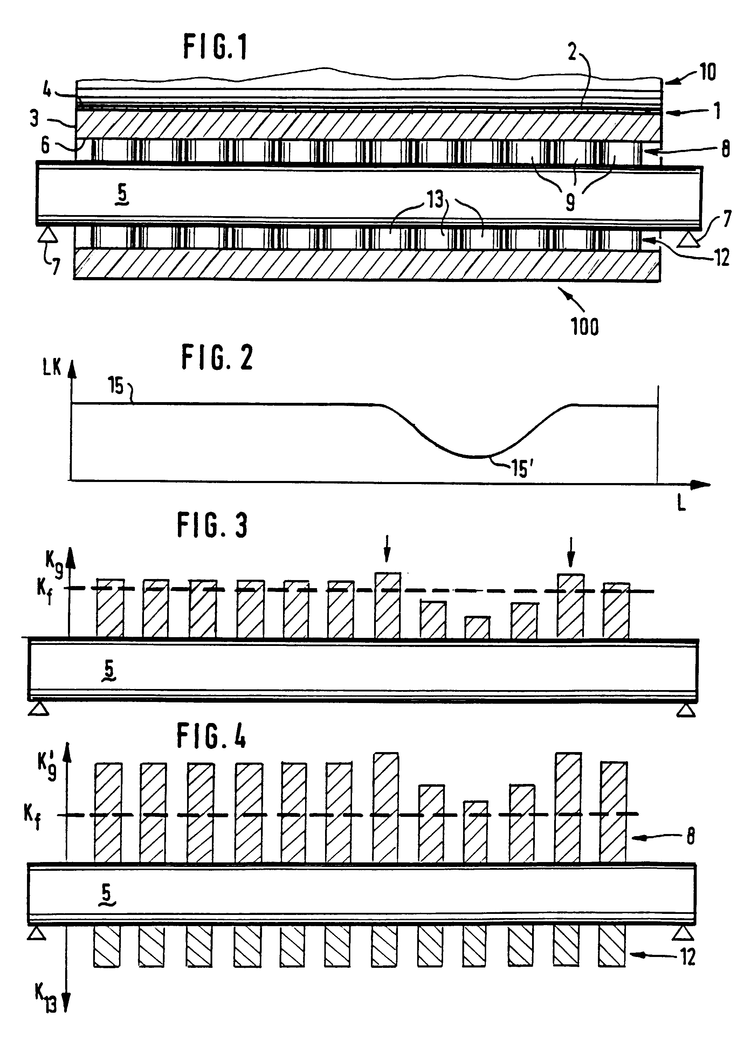

Die in Fig. 1 als Ganzes mit 100 bezeichnete Walze ist die Unterwalze eines Walzenpaars und arbeitet mit einer Walze 10 zusammen. Die in dem Walzspalt 1 zu behandelnde Papierbahn 2 soll eine Druckbehandlung mit niedriger Linienkraft erhalten, die über die Breite der Papierbahn 2 ein bestimmtes Profil 15 hat, welches sich aus Ungleichmäßigkeiten der Papierbahn in Breitenrichtung ergeben mag und in der Kurve der Fig. 2 dargestellt ist, die den Verlauf der im Walzspalt 1 von der Walze 100 ausgeübten Linienkraft LK (= Kraft pro cm Walzenlänge) über der Länge der Walze 100 gemessen von deren in Fig. 1 linkem Ende, wiedergibt. Die Ungleichmäßigkeiten können z.B. ungleichmäßige Feuchte, ungleichmäßiger Glanz o.dgl. sein, denen durch die Behandlung entgegengewirkt werden soll. In dem Beispiel soll also in der rechte Hälfte eine Erniedrigung bzw. eine Art Tal 15' der Linienkraft vorhanden sein. Es versteht sich jedoch, daß auch ein gleichmäßiger, relativ niedriger Liniendruck in Betracht kommt.

Die Walze 100 umfaßt eine Hohlwalze 3 mit einem arbeitenden Walzenumfang 4 und einen zylindrischen glatten Innenumfang 6, die der Länge nach von einem Querhaupt 5 durchgriffen ist, welches an seinen Enden äußere Abstützungskräfte 7 erfährt. Die Hohlwalze 3 beläßt ringsum radialen Abstand zu dem Querhaupt 5. An dem Querhaupt 5 ist auf dem Walzspalt 1 zugewandte Seite eine erste Reihe 8 von dicht aufeinanderfolgenden Stützelementen 9 vorgesehen, denen durch nicht dargestellte Zuleitungen im Querhaupt einzeln Druckflüssigkeit mit pro Stützelement unterschiedlichem Druck zuführbar ist. Es können aber auch kleine Gruppen von Stützelementen 9, beispielsweise Randgruppen von zwei oder drei Stützelementen 9, gemeinsam beaufschlagt werden.

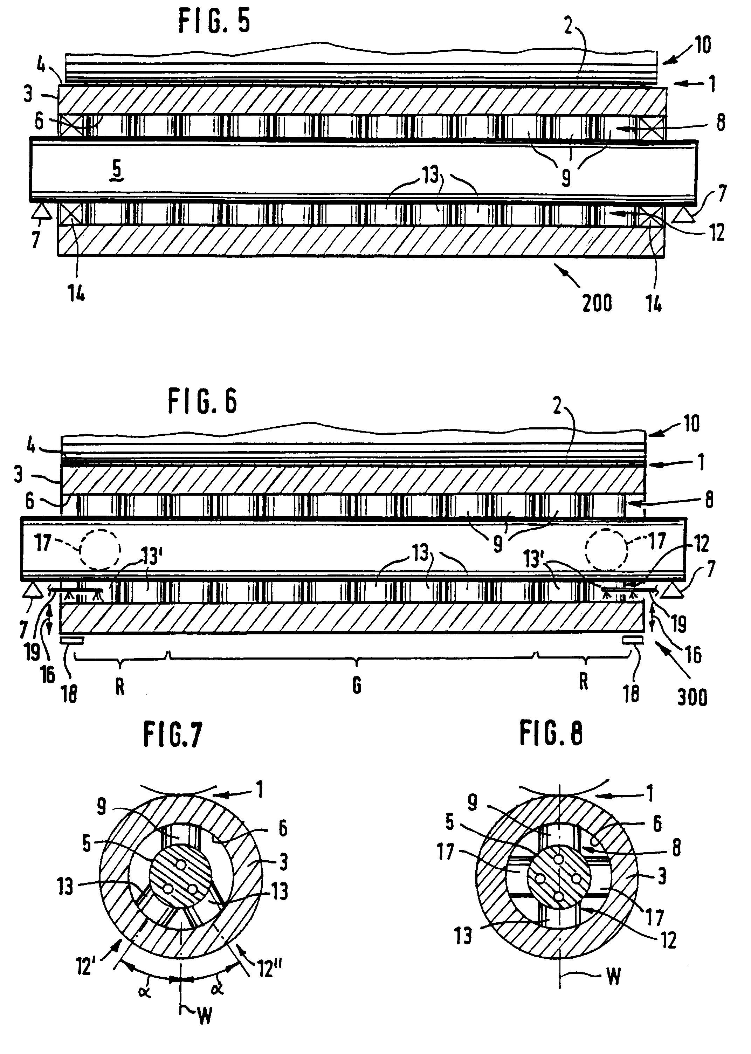

Gegenüber der Reihe 8 ist eine in Umfangsrichtung um 180° versetzte zweite, sich über die gesamte Länge der Walze 100 erstreckende Reihe 12 von Stützelementen 13 vorgesehen, die von dem Walzspalt 1 hinwegwirken und die Hohlwalze 3 also von der Gegenwalze 10 hinwegzuziehen bestrebt sind. Statt der einen Reihe 12 von Stützelementen 13 könnten auch beispielsweise zwei Reihen 12' und 12" vorhanden sein, wobei zweckmäßig jeweils zu den Reihen 12,12' und 12" gehörende einander zugeordnete Stützelemente 13 in zur Achse senkrechten Ebenen und die Resultierenden der Kräfte der Stützelemente 13 der beiden Reihen 12',12" in der Wirkebene der Walze 100 gelegen bzw. der jeweiligen Kraft K₉ entgegengesetzt ist (Fig. 7).

Die Stützelemente 9,13 folgen in den Reihen 8,12 längs der Walze 100 dicht, d.h. ohne vermeidbare Lücken ihrer Wirkungsbereiche, jedoch ohne einander zu berühren, aufeinander und haben üblicherweise in Längsrichtung der Walze 100 gesehen Erstreckungen in der Größenordnung von 150 bis 300 mm, während die Walze 100 eine Arbeitsbreite im Bereich von 5 m bis 10 m haben kann. Es können dementsprechend pro Reihe 8,12 etwa dreißig und mehr Stützelemente 9,13 hintereinander vorgesehen sein. Die Wiedergabe in Fig. 1 ist also nicht maßstäblich. Im allgemeinen sind die Stützelemente 9 und 13 jeder Reihe 8,12 untereinander gleich ausgebildet und liegt jeweils ein Stützelement 13 einem Stützelement 9 gegenüber.

In Fig. 1 liegen die Stützelemente 9,13 einander jeweils diametral in der Wirkebene gegenüber. In Fig. 7 ist jedoch angedeutet, daß die die Stützelemente 13 auf der dem Walzspalt abgewandten Seite auch zu beiden Seiten der Wirkebene in zwei gegenüber der Wirkebene gleiche Winkel a bildenden Reihen 12' und 12" angeordnet sein könnten. Die Resultierende der Kräfte der den einzelnen in einer gleichen zur Achse der Walze senkrechten Ebene gelegenen Stützelemente 13,13 liegt dabei in der Wirkebene, ist jedoch der Kraft des in der gleichen zur Achse senkrechten Ebene gelegenen Stützelements 9 entgegengesetzt.

Zur Ausbildung des gewünschten Linienkraftprofils 15 quer zur Papierbahn 1 sind alle Stützelemente 9 unterschiedlich ansteuerbar. Die einzelnen Stützelemente 9 üben in ihrem Längenbereich lokale Kräfte aus, die gegen den Innenumfang 6 in Richtung auf den Walzspalt 1 wirken und sich im Walzspalt 1 auf dem arbeitenden Walzenumfang 4 der Hohlwalze 3 in einem Linienkraftprofil 15 äußern, bei dessen Zustandekommen die Steifigkeit der Hohlwalze 2 eine wesentliche Rolle spielt. Die von den einzelnen Stützelementen 9 für die Erzielung eines bestimmten Linienkraftprofils 15 auszuübenden Kräfte müssen in ihrem Verlauf längs der Walze dem Linienkraftprofil 15 durchaus nicht proportional folgen.

In Fig. 3 sind die von den einzelnen Stützelementen 9 der Fig. 1 auszuübenden Kräfte K₉ angedeutet, die notwendig wären, um das in Fig. 2 wiedergegebene Linienkraftprofil 15 zu erzeugen, wenn die Reihe 12 der Stützelemente 13 nicht vorhanden oder außer Betrieb wäre. Das Linienkraftprofil 15 würde in diesem Fall also ausschließlich durch die oberen Stützelemente 9 erzeugt. Es zeigt sich, daß zu beiden Seiten des Linienkrafttals 15' bei den dortigen, durch die Pfeile hervorgehobenen Stützelementen 9 eine Erhöhung der ausgeübten Kraft vorgenommen werden muß, während dazwischen eine Erniedrigung stattfindet. Nur so kann das seitlich recht scharf begrenzte Linienkrafttal 15' realisiert werden.

Die Stützelemente 9 bedürfen zu einer einwandfreien Funktion eines gewissen hydraulischen Mindestdrucks in der Größenordnung von etwa 3 bar, der in Fig. 3 und 4 mit K_{f} bezeichnet ist. Es zeigt sich, daß die drei im Bereich des Linienkraftprofiltals 15' gelegenen Stützelemente 9 mit einem Druck gefahren werden müßten, der unter K_{f} liegt oder in bestimmten Fällen sogar negativ sein müßte. Das gewünschte Linienkraftprofil 15 ließe sich also mit einer derartigen Anordnung von Stützelementen nicht darstellen.

In Fig. 4 ist eine Anordnung dargestellt, die der Walze 100 der Fig. 1 entspricht und bei der zwei Reihen 8,12 mit in Umfangsrichtung um 180° versetzten Stützelementen 9,13 vorhanden sind, die nach oben, also gegen den Walzspalt 1 hin Kräfte K₉, und nach unten Kräfte K₁₃ ausüben.

Die Stützelemente 13 der zweiten, von dem Walzspalt 1 hinweggerichteten Reihe 12 werden so angesteuert, daß sie alle den gleichen hydraulischen Druck erhalten und über die Länge der Walze eine gleichmäßige Gegen-Linienkraft erzeugen. Wenn bei Vorhandensein einer solchen Gegenlinienkraft das Linienkraftprofil 15 erzeugt werden soll, ist es notwendig, die in den einzelnen Stützelementen 9 der ersten Reihe 8 herrschenden hydraulischen Drücke zu erhöhen, um zu positiven Linienkräften im Walzspalt 1 zu kommen. Auf diese Weise werden die Kräfte K'₉ und damit die zu ihrer Bereitstellung in den einzelnen Stützelementen 9 notwendigen hydraulischen Betriebsdrücke künstlich in einem Bereich verschoben, in dem alle Kräfte K'₉ über K_{f} liegen und eine einwandfreie Funktion der Stützelemente 9 sichergestellt ist.

Bei der das Prinzip wiedergebenden Fig. 1 erstreckt sich die Reihe 12 der gleichmäßig angesteuerten Stützelemente 13 über die gesamte Länge der Walze 100.

Eine solche Ausbildung kommt konkret in erster Linie bei einer Walze 200 nach Fig. 5 in Betracht, bei der die Hohlwalze 3 über an ihren beiden Enden vorgesehene Lager 14 auf dem Querhaupt 5 gelagert ist.

Es ist aber auch möglich, nur eine Gruppe G mehrerer aufeinanderfolgender Stützelemente 13 der zweiten Reihe 12 gleichmäßig anzusteuern, wie es bei der Walze 300 der Fig. 6 wiedergegeben ist. Die Walze 300 ist eine solche mit inneren Hub, bei der an den Enden keine Lager vorgesehen sind, die den Lagern 14 der Fig. 5 vergleichbar sind. Die Hohlwalze 3 ist in geeigneten nicht dargestellten Führungen in der Wirkebene, d.h. parallel zur Zeichenebene quer zum Querhaupt 5 im Sinne der Pfeile 16 beweglich. Hier sind in der zweiten Reihe 12 an den Enden kleine Gruppen R von in dem Beispiel zwei Stützelementen 13' vorgesehen, die nicht zu der gleichmäßig angesteuerten Gruppe G gehören, sondern unabhängig davon angesteuert werden, um rückwärts, d.h. vom Walzspalt 1 hinweggerichtete Kräfte zu erzeugen. Eine solche Maßnahme kann erforderlich werden, um die Hohlwalze an ihren Enden von dem Walzspalt 1 hinwegzuziehen und gegebenenfalls dort eine überhöhte Kantenpressung der Papierbahn 2 zu vermeiden.

In Fig. 6 ist eine weitere Möglichkeit zur zusätzlichen Beeinflussung des Endbereichs der Hohlwalze 3 angedeutet. Es handelt sich um in Querrichtung wirkende zusätzliche Spreizelemente 17, deren Anordnung aus Fig. 8 hervorgeht und die ebenso wirken wie die Stützelemente 9,13, nur in einer um 90° in Umfangsrichtung verdrehten Wirkrichtung. Die durch die Stützelemente 9,13 erzeugte Ovalität der Hohlwalze 3 nimmt zwar gegen das Ende hin ab, so daß sich der Querschnitt der Hohlwalze 3 dort von selbst wieder mehr der Kreisform annähert. Der damit einhergehende Abfall der Linienkraft im Walzspalt 1 kann jedoch durch die Spreizelemente 17 noch unterstützt werden. Die Spreizelemente müssen nicht zwangsläufig in einer zur Wirkebene senkrechten Ebene W senkrechten Ebene angeordnet sein, wie es in Fig. 8 dargestellt ist. Wenn bei der Ausführungsform nach Fig. 7 die Winkel a größer als dargestellt gewählt werden, ergibt sich auch hier ein gewisser Spreizeffekt bei gleichzeitiger Aufbringung einer vom Walzspalt 1 hinwegwirkenden Gegenkraft.

In Fig. 6 sind auch noch Möglichkeiten zur thermischen Beeinflussung der Enden der Hohlwalze angedeutet. Es könnten z.B. induktive Spulen 18 an den Enden dicht außerhalb der Hohlwalze 3 angeordnet sein. Alternativ könnte die thermische Profilierung auch von innen erfolgen, was durch den Sprüheinrichtung 19 wiedergegeben sein soll. Die Einwirkung des von innen gegen den Innenumfang 6 der Hohlwalze 3 gesprühten Wärmeträgermediums beschränkt sich auf den Endbereich der Hohlwalze 3 und verleiht diesem eine abweichende Temperatur mit entsprechender Abweichung von der Zylindrizität und Beeinflussung des Linienkraftverlaufs am Ende.

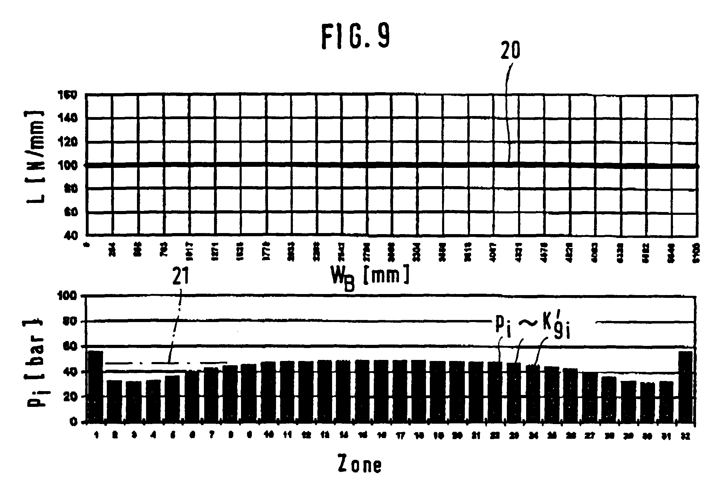

Fig. 9 dient zur detaillierteren Erläuterung der besonderen Bedeutung der anhand der Fig. 6 bis 8 beschriebenen zusätzlichen Maßnahmen zur Beeinflussung des Linienkraftprofils an den Enden der Walze 100. Die Fig. 3 und 4 sind insoweit sehr schematisch und sollen nur das Prinzip veranschaulichen. Fig. 9 jedoch basiert auf einer konkreten berechneten Verteilung der in den einzelnen Stützelementen 9 notwendigen hydraulischen Drücke. Es sei angenommen, die zu behandelnde Bahn habe über ihre Breite W_{B} gleichmäßige Eigenschaften und erstrecke sich über die Länge der Walze 100. Es sei angestrebt, auf diese Bahn eine über ihre Breite gleichmäßiqe Linienkraft L von 100 N/mm Warenlänge auszuüben, die durch die horizontale Linie 20 wiedergegeben ist. Die dem Beispiel zugrundeliegende Walze 100 hat zweiunddreißig Stützelemente 9. Die von einem einzelnen Stützelement 9ᵢ ausgeübte Kraft ist proportional dem darin herrschenden hydraulischen Druck pᵢ (i = 1 ... 32). Das Diagramm im unteren Teil der Fig. 9 zeigt deutlich, daß die Verteilung der Drücke pᵢ bzw. der von den entsprechenden Stützelementen 9ᵢ ausgeübten Einzelkräfte die für einen konstanten Verlauf der Linienkraft L im Walzspalt 1 erforderlich ist, an den Enden der Walze 100 weit von einer Konstanz entfernt sind. Die endständigen Stützelemente 9₁ und 9₃₂ müssen Drücke erhalten und Kräfte aufbringen, die erheblich über dem im Bereich der mittleren Stützelemente 9₁₃ bis 9₂₀ vorhandenen mittleren Wert liegen. Die den endständigen Stützelementen 9₁ und 9₃₂ innen benachbarten Stützelemente 9₂ bis 9₆ und 9₂₈ bis 9₃₀ hingegen müssen Kräfte zustande bringen, die erheblich unter dem genannten Mittelwert liegen.

Die starke Ungleichmäßigkeit der geforderten Kraftausübung durch die Stützelemente im Randbereich ist schon durch die Eigenschaften der Walze 100 selbst bedingt. Wenn dann noch äußere Einflüsse hinzukommen und die Bahn eben nicht, wie vorstehend angenommen, über die ganze Länge der Walze 100 gleichmäßig ist, können am Rand zusätzliche Korrekturen notwendig sein, d.h. es können die endständigen Stützelemente 9₁ und 9₃₂ noch höhere Kräfte und die benachbarten Stützelemente noch niedrigere Kräfte ausüben müssen. Dabei kann die Walze 100, wenn sie nur mit den Stützelementreihen 8 und 12 arbeitet, an technische Grenzen stoßen.

In diesen Fällen sind zusätzliche Korrektureinrichtungen von Bedeutung, wie sie anhand der Fig. 6 bis 8 beschrieben worden sind. Die Korrektureinrichtungen können allerdings auch so eingesetzt werden, daß sie zur vergleichmäßigung der von den einzelnen Stützelementen 9 geforderten Kräfte K'gᵢ dienen, deren zur Walzenkorrektur, d.h. zum Ausgleich der Verformungseigenschaften der Hohlwalze 3 notwendige ungleichmäßige Verteilung sich aus dem unteren Diagramm der Fig.9. ergibt. Die Korrektureinrichtungen beeinflussen also ohne Berücksichtigung von Ungleichmäßigkeiten der Bahn die Walze 100 so, daß die Stützelemente 9 auch am Rand eine im wesentlichen gleichmäßige Kraft erzeugen können, um die Gleichmäßigkeit der Linienkraft im Walzspalt zu gewährleisten. Die gleichmäßige Kraftverteilung ist durch die gestrichelte Linie 21 angedeutet.

Wenn dann die Bahn mit ihren Ungleichmäßigkeiten am Rande kommt, haben die dortigen Stützelemente 9 noch ihr Korrekturpotential zur Verfügung und kann die Bahnkorrektur mittels dieser Stützelemente 9, also einfach und verzögerungsfrei, erfolgen, ohne daß die zusätzlichen Korrektureinrichtungen dann dafür noch herangezogen werden müßten.

## Patentansprüche

1. Verwendung einer Walze (100) zur Erzeugung besonders niedriger Linienkräfte im Bereich von einigen wenigen 10N/cm Walzenlänge in einem Walzspalt (1)
mit einer umlaufenden, den arbeitenden Walzenumfang (4) bildenden Hohlwalze (3),
mit einem undrehbaren, die Hohlwalze (3) der Länge nach durchgreifenden, ringsum radialen Abstand vom Innenumfang (16) der Hohlwalze (3) belassenden Querhaupt (5), auf welches an den Enden äußere Kräfte (7) übertragbar sind,
mit einer ersten Reihe (8) mehrerer an dem Querhaupt (5) angeordneter und sich an diesem abstützender, in dessen Längsrichtung dicht aufeinanderfolgender, einzeln oder höchstens in kleinen Gruppen von bis etwa drei Stützelementen (8) separat ansteuerbarer hydrostatischer Stützelemente (9), mittels deren voneinander unabhängige, gegen den Walzspalt (1) gerichtete Kräfte (K'₉) gegen den Innenumfang (6) der Hohlwalze (3) ausübbar sind,
und mit mindestens einer zweiten Reihe (12) mehrerer an dem Querhaupt (5) angeordneter und sich an diesem abstützender, in dessen Längsrichtung aufeinanderfolgender, hydrostatischer Stützelemente (13), mittels deren vom Walzspalt (1) hinweggerichtete Kräfte (K₁₃) gegen den Innenumfang (6) der Hohlwalze (3) ausübbar sind,
mit in oder an dem Querhaupt (15) vorgesehener Zuleitungen für hydraulische Druckflüssigkeit zu jedem einzelnen Stützelement (9,13)
und mit einer Steuereinrichtung, mittels derer die Drücke in den einzelnen Zuleitungen unabhängig voneinander wählbar sind,
wobei mindestens eine Gruppe (G) von mehreren aufeinanderfolgenden Stützelementen (13) der zweiten Reihe (12) so angesteuert wird, daß sie eine über die Erstreckung der Gruppe in Längsrichtung der Walze (100) gleichmäßige Gegen-Linienkraft erzeugen,
um bei Erzeugung besonders niedriger Linienkräfte im Bereich von einigen wenigen 10 N/cm Walzenlänge im Walzspalt (1) durch die gleichmäßige Gegen-Linienkraft eine Erhöhung der Kräfte (K'₉) der ersten Reihe (8) derart herbeizuführen, daß die Kräfte (K'₉) oberhalb der Kraft liegen, die einem für eine einwandfreie Funktion der Stützelemente (9) notwendigen Mindestdruck (K_{f}) oberhalb etwa 3 bar entspricht.

2. Verwendung nach Anspruch 1, wobei die Linienkraftverteilung im Walzspalt (1) an mindestens einem Ende der Walze (100,200,300) zusätzlich korrigiert wird.

## Claims

1. Use of a roller (100) for generating particularly low line forces in the range of a few tens of N/cm length of roller in a nip (1), comprising
a rotating shell (3) constituting the working roller periphery (4),
a non-rotatable beam (5) which extends longitudinally through the shell (3) and leaves a radial space all round between it and the inner periphery (16) of the shell (3), external forces (7) being transmissible to the ends of the beam,
a first row (8) of a number of hydrostatic support elements (9) disposed on and abutting the beam (5), following one another closely in the longitudinal direction thereof and separately actuatable individually or at most in small groups of up to about three support elements, so as to exert independent forces (K'₉) in the direction of the nip (1) against the inner periphery (6) of the shell (3),
at least one second row (12) of a number of hydrostatic support elements (13) disposed on and abutting the beam (5) and following one another in the longitudinal direction thereof, for exerting forces (K₁₃) in the opposite direction to the nip (1) against the inner periphery (6) of the shell (3),
feed pipes in or on the beam (15) for supplying hydraulic pressure fluid to each individual support element (9, 13) and
a control device for selecting the pressures in the individual feed pipes independently of one another,
wherein at least one group (G) of a number of successive support elements (13) in the second row (12) are so actuated as to generate a uniform counter line force across the group in the longitudinal direction of the roller (100),
so that when particularly low line forces in the range of a few tens of N/cm length of roller are generated in the nip (1), the uniform counter line force results in an increase in the forces (K'₉) of the first row (8) such that the forces (K'₉) are above the force corresponding to a minimum pressure (K_{f}) above about 3 bars necessary for efficient operation of the support elements (9) .

2. Use according to claim 1, wherein the distribution of line force in the nip (1) is additionally corrected at at least one end of the roller (100, 200, 300).

## Revendications

1. Utilisation d'un rouleau (100) pour obtenir, dans une fente d'emprise (1), des forces linéaires particulièrement basses, d'un niveau ne dépassant pas quelques 10 N/cm. de longueur de rouleau, dans laquelle on met en oeuvre :
- un rouleau creux (3), tournant, dont la surface périphérique (4) est une zone de travail,
- avec une traverse (6) sans rotation, passant longitudinalement à l'intérieur du rouleau creux et laissant tout autour d'elle un espacement radial par rapport à la périphérie interne (16) du rouleau creux (3), des forces externes (7) pouvant être exercées sur les extrémités de la traverse,
- avec une première rangée (8) d'éléments de soutien (9), montés le long de la traverse (5) et en appui sur elle, se suivant de près en direction longitudinale, individuellement ou au maximum par petits groupes (8) de trois éléments au plus, ces éléments hydrostatiques et commandables séparément pouvant exercer sur la périphérie interne (6) du rouleau creux (3) des forces (K'₉) dirigées vers la fente d'emprise (1) et indépendantes les unes des autres,
- et avec au moins une deuxième rangée (12) d'éléments de soutien (13) montés le long de la traverse (5) et en appui sur elle, se suivant de près en direction longitudinale, ces éléments hydrostatiques pouvant exercer sur la périphérie interne (6) du rouleau creux (3) des forces (K₁₃) dont la direction part de la fente d'emprise (1),
- avec des conduites montées sur ou dans la traverse (15) et servant à amener du fluide hydraulique à chacun des éléments de soutien (9, 13),
- et avec un dispositif de commande permettant de choisir, indépendamment les unes des autres, les pressions dans les diverses conduites,
au moins un groupe (G) de plusieurs éléments successifs (13) de la deuxième rangée (12) est commandé de manière à obtenir, sur toute l'étendue du groupe, une contreforce linéaire régulière selon la direction longitudinale du rouleau (100), ceci pour que, une fois que dans la fente d'emprise (1) des forces linéaires particulièrement basses, d'un niveau ne dépassant pas quelques 10 N/cm de longueur du rouleau, ont été obtenues, on provoque par la contreforce linéaire régulière une augmentation des forces (K'₉) de la première rangée (8) de manière que les forces (K'₉) se trouvent au-dessus de la force qui correspond à une pression minimum (K_{f}) nécessaire pour une fonction sans défaut des éléments de soutient (9) au-dessus de 3 bars environ.

2. Utilisation selon la revendication 1,
caractérisée en ce que
la distribution de la force linéaire dans la fente d'emprise (1) peut bénéficier d'une correction supplémentaire au moins à une extrémité du rouleau (100, 200, 300).
